# EUROPÄISCHE PATENTSCHRIFT

(11) **EP 3 246 771 B1**
(45) Veröffentlichungstag und Bekanntmachung des Hinweises auf die Patenterteilung: **30.06.2021**
(21) Anmeldenummer: 16169894.9
(22) Anmeldetag: 17.05.2016
(51) Int. Cl.: G05B 19/042

(54) **VERFAHREN ZUM BETREIBEN EINES REDUNDANTEN AUTOMATISIERUNGSSYSTEMS**
METHOD FOR OPERATING A REDUNDANT AUTOMATION SYSTEM
PROCEDE DE FONCTIONNEMENT D'UN SYSTEME D'AUTOMATISATION REDONDANT

(43) Veröffentlichungstag der Anmeldung: 22.11.2017
(73) Patentinhaber: Siemens Aktiengesellschaft, 80333 München (DE)
(72) Erfinder: Kleifges, Georg, 76337 Waldbronn (DE); Laforsch, Jürgen, 77815 Bühl (DE)

(56) Entgegenhaltungen:
- EP-A1- 2 765 464
- US-A1- 2015 095 690

## Beschreibung

Die Erfindung betrifft ein Verfahren zum Betreiben eines redundanten, mit zwei Teilsystemen versehenen Automatisierungssystems, wobei in einem redundanten Betrieb eines der Teilsysteme als Master fungiert und die Prozesssteuerung übernimmt und das andere Teilsystem als Reserve fungiert.

Ein derartiges Verfahren ist beispielsweise aus der EP 0 907 912 B1 bekannt. Dort sind zwei Teilsysteme ereignissynchron gekoppelt, wobei an geeigneten Programmstellen, an denen ein Datenabgleich vorgesehen ist, beide Teilsysteme auf eine Antwort des jeweils anderen Teilnehmers warten und erst bei Erhalt der Antwort jeweils ihre Programmverarbeitung synchron fortsetzen. Allerdings kommt es häufig dann zu Synchronisationsproblemen, wenn in einem der beiden Teilsysteme transiente Fehler auftreten. Eine mögliche Ursache für derartige temporär auftretende und gewöhnlich nicht zu lokalisierende Fehler können "Bitkipper" im Arbeitsspeicher, "Bitkipper" im ASIC, Firmware-Fehler oder ein fehlerhaftes Verhalten eines Programms oder Programmteils sein, wobei dieses Verhalten sich nur unter einer bestimmten Bedingung einstellt. Ein transienter Fehler kann zu einem Totalausfall beider Teilsysteme führen, weil gewöhnlich das als Reserve fungierende Teilsystem zum Starten eines Fehlersuchbetriebs in einen STOPP-Zustand überführt wird und das noch laufende "fehlerbehaftete" und als Master fungierende Teilsystem kurz nach dieser Überführung ausfällt. Aufgrund eines derartigen Totalausfalls wird zunächst der zu steuernde Prozess heruntergefahren, das defekte Teilsystem ausgetauscht und schließlich der Prozess wieder angefahren, was eine hohe Stillstandszeit bedeutet.

Aus der EP 2 765 464 A1 ist ein Verfahren zum Betreiben eines redundanten Automatisierungssystems bekannt, mittels dessen störende Auswirkungen eines transienten Fehlers weitgehend vermieden werden.

Der Erfindung liegt daher die Aufgabe zugrunde, ein Verfahren zum Betreiben eines Automatisierungssystems gemäß dem Oberbegriff des Anspruchs 1 anzugeben, welches die Verfügbarkeit des Automatisierungssystems erhöht.

Diese Aufgabe wird durch die im kennzeichnenden Teil des Anspruchs 1 angegebenen Maßnahmen gelöst.

Vorteilhaft ist, dass unabhängig davon, ob transiente Fehler auf dem als Master oder auf dem als Reserve fungierenden Teilsystem auftreten, ein Totalausfall des Automatisierungssystems weitgehend vermieden wird.

Die Erfindung geht von der Idee aus, nicht unmittelbar nach einem Synchronisationsverlust - sondern erst zeitverzögert - einen Fehlersuchbetrieb in dem als Reserve fungierenden Teilsystem zu starten, um die Ursache eines Synchronisationsverlusts bzw. den potentiellen Fehler auf der Reserve zu ermitteln. Dadurch wird weitgehend vermieden, dass für den Fall, dass der Master aufgrund eines transienten Fehlers ausfällt, die Reserve sich bereits im Fehlersuchbetrieb befindet und dadurch während des Fehlersuchbetriebs das Automatisierungssystem komplett ausfällt. Die Zeitverzögerung bzw. die Zeitspanne ist so gewählt, dass für den Fall, dass der Master während dieser Zeitspanne ausfällt, die Reserve die Prozesssteuerung übernehmen kann, wobei in diesem Fall, die Reserve den Fehlersuchbetrieb erst gar nicht aktiviert bzw. startet. Unter einem kompletten Ausfall des Automatisierungssystems wird verstanden, dass weder der Master noch die Reserve in der Lage ist, die Prozesssteuerung zu übernehmen.

Nach dem Fehlersuchbetrieb der Reserve der Master diese Reserve im Rahmen eines Aufdatens mit relevanten (Steuerungs)Daten versorgt, wobei nach dem Aufdaten die Reserve als neuer Master die Prozesssteuerung übernimmt und der Master als neue Reserve einen weiteren Fehlersuchbetrieb startet. Dadurch wird geprüft, ob der "alte" Master ("neue" Reserve) für die Ursache des Synchronisationsverlustes bzw. für den Fehler verantwortlich ist, wobei der "neue" Master ("alte" Reserve) die Prozesssteuerung in einem Solobetrieb mit relevanten Steuerungs- bzw. Prozessdaten übernimmt.

In einer Ausgestaltung der Erfindung gemäß den im Anspruch 2 angegebenen Maßnahmen ist vorgesehen, dass nach der vorgegebenen Zeitspanne (Timeout) und für den Fall, dass während des Fehlersuchbetriebs die Reserve einen Fehler detektiert, die Reserve einen Defekt-Zustand einnimmt. Der Master steuert immer noch in einem Solobetrieb den Prozess und es wird ermöglicht, dass ein Service-Techniker die Reserve austauschen kann. Unter einem Defekt-Zustand der Reserve wird ein gestörter Betrieb der Reserve verstanden, im Rahmen dessen die Reserve die Prozesssteuerung nicht bewerkstelligen kann.

In einer weiteren Ausgestaltung der Erfindung gemäß den im Anspruch 3 angegebenen Maßnahmen ist vorgesehen, dass für den Fall, dass während des Fehlersuchbetriebs der Master ausfällt bzw. gestört ist und daher der Master die Masterschaft bzw. die Prozesssteuerung nicht verwirklichen bzw. fortführen kann, der Master zunächst interne Master-Daten der Reserve übermittelt und einen Defekt-Zustand anzeigt, wobei die Reserve als neuer Master die Prozesssteuerung übernimmt. Diese Umschaltung bzw. dieser Masterschafts-Wechsel erfolgt zwar nicht "stoßfrei" (sondern es erfolgt aufgrund der Umschaltung ein Sprung bzw. Stoß der Werte an den Prozessausgängen), es wird allerdings auch in diesem Fall vermieden, dass das Automatisierungssystem ausfällt.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein Flussdiagramm und
- Figur 2: ein redundantes Automatisierungssystem.

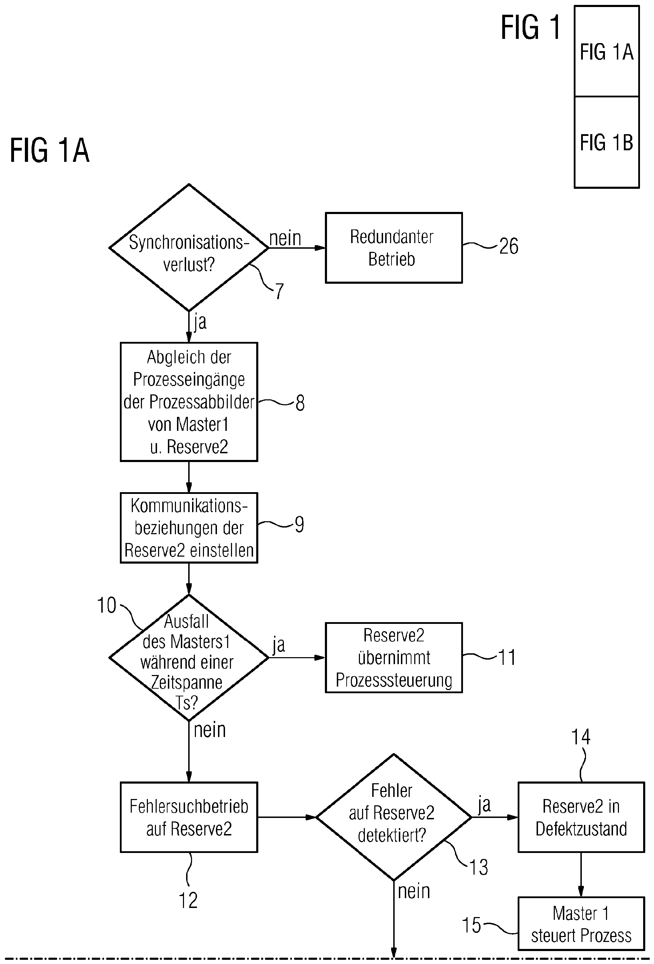

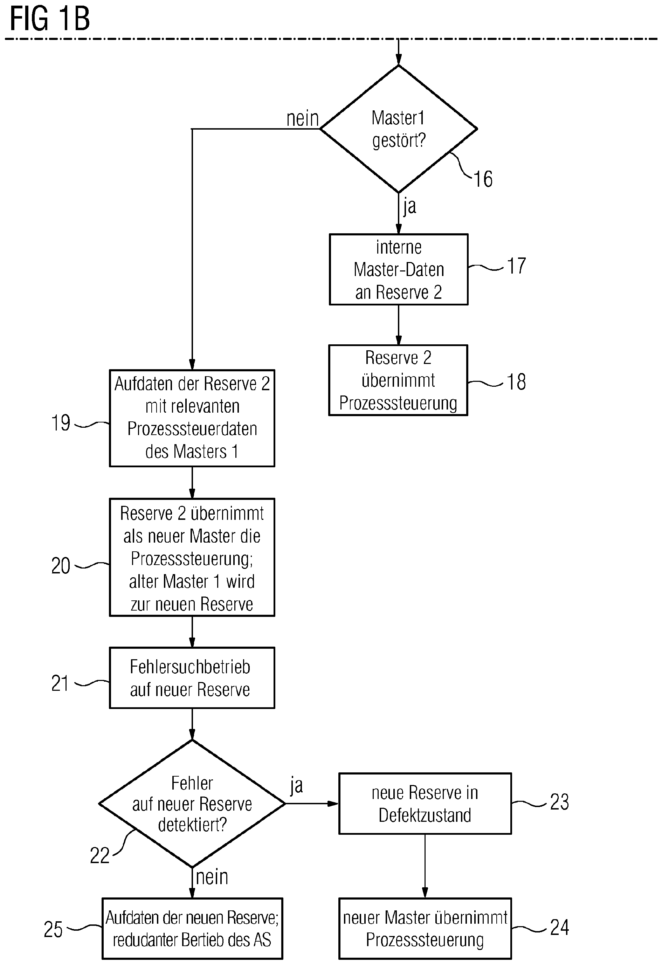

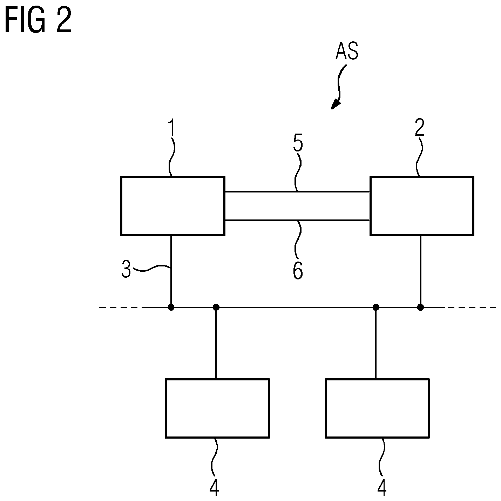

Die in den Figuren 1 und 2 gleichen Teile sind mit gleichen Bezugszeichen versehen.

Es wird zunächst auf Figur 2 verwiesen, in welchem ein an sich bekanntes redundantes Automatisierungssystem dargestellt ist. Dieses weist ein erstes und ein zweites Teilsystem 1, 2 auf, die über einen Feldbus 3 mit Peripherieeinheiten 4 verbunden sind. Dabei genügt der Feldbus 3 beispielsweise der PROFIBUS-DP-Spezifikation. Prinzipiell sind auch andere Bussysteme, z. B. Ethernet (ProfiNet Systemredundanz), Modbus oder aber auch parallele Bussysteme geeignet. Die Peripherieeinheiten 4 erhalten über Eingangsleitungen Signale von Messumformern oder Messwertgebern, die zur Erfassung eines Prozesszustands dienen, und geben über Ausgangsleitungen Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme 1, 2 verarbeiten das gleiche Steuerprogramm, wobei eines der Teilsysteme 1, 2 die Master-Funktion (Masterschaft) und das andere Teilsystem 1, 2 die Reserve-Funktion übernimmt, wobei nur das Teilsystem 1, 2 lesend und/oder schreibend auf die Peripherieeinheiten zugreift, das die Master-Funktion ausübt bzw. als Master fungiert. Für den Fall, dass das als Master fungierende Teilsystem 1, 2 ausfällt, übernimmt das andere Teilsystem 1, 2 die Master-Funktion. Um zu ermöglichen, dass beide Teilsysteme 1, 2 ihre jeweiligen Steuerprogramme bzw. Programmpfade dieser Steuerprogramme synchron verarbeiten, synchronisieren diese sich über zwei Synchronisationsverbindungen 5, 6 wobei die Redundanz- und Überwachungsfunktionen über diese beiden Synchronisationsverbindungen 5, 6 verwirklicht werden.

Es kann nun vorkommen, dass während des redundanten Betriebs des Automatisierungssystems AS beispielsweise aufgrund eines nicht rechtzeitig erkannten Speicherfehlers ein Synchronisationsverlust erkannt wird und daher das Automatisierungssystem AS von dem Redundanzbetrieb in einen Solobetrieb überführt wird, wobei ferner im Rahmen eines Fehlersuchbetriebs das Teilsystem 1, 2 lokalisiert wird, auf welchem der Fehler liegt bzw. welches für den Synchronisationsverlust verantwortlich ist.

Im Folgenden wird auf Figur 1 verwiesen, in welchem ein Flussdiagramm zur Veranschaulichung eines Fehlersuchbetriebs dargestellt wird. Es wird davon ausgegangen, dass das Teilsystem 1 (CPU 1) als Master und das Teilsystem 2 (CPU 2) als Reserve fungiert und ein Synchronisationsverlust (Verzweigung 7) mittels geeigneten Redundanz- und Überwachungsfunktionen des Masters 1 und der Reserve 2 erkannt wurde, wodurch das Automatisierungssystem AS von einem redundanten Betrieb 26 in einen Solobetrieb wechselt.

Im Rahmen einer ersten Operation 8 werden zunächst Prozesseingänge eines Prozessabbildes des Masters 1 mit Prozesseingängen eines Prozessabbildes der Reserve 2 abgeglichen und in einer weiteren Operation 9 die Kommunikation der Reserve 2 mit weiteren hier nicht dargestellten Komponenten des Automatisierungssystems AS eingestellt. Im Rahmen der Operation 9 übermittelt ferner die Reserve 2 den Peripherieeinheiten 4 keine Prozessausgangssignale. Um zu verhindern, dass während eines Fehlersuchbetriebs der Reserve 2 das Automatisierungssystem AS komplett ausfällt, weil der Master 1 fehlerbehaftet ist, startet die Reserve 2 den Fehlersuchbetrieb erst nach einer vorgegebenen Zeitspanne bzw. Zeitverzögerung Ts (Entscheidung bzw. Verzweigung 10). Diese Zeitverzögerung Ts, welche mittels eines Engineering-Systems des Automatisierungssystems AS projektierbar ist, ist so gewählt, dass die Reserve 2 vor einem möglichen Defekt bzw. Ausfall des Masters 1 die Prozesssteuerung noch sicher übernehmen kann (Operation 11). In diesem Fall aktiviert bzw. startet die Reserve 2 den Fehlersuchbetrieb erst gar nicht. Es wird darauf hingewiesen, dass unter einem Defekt bzw. Defekt-Zustand ein gestörter Betrieb eines fehlerbehafteten Teilsystems verstanden wird, im Rahmen dessen dieses Teilsystem die Prozesssteuerung nicht bewerkstelligen kann.

Für den Fall, dass der Master 1 während dieser vorgegebenen Zeitspanne Ts nicht ausgefallen ist, startet die Reserve 2 den Fehlersuchbetrieb (Schritt bzw. Operation 12). Für den Fall, dass die Reserve 2 erkennt, dass sie fehlerbehaftet ist (Verzweigung 13), was bedeutet, dass die Reserve 2 für den Synchronisationsverlust verantwortlich ist, schaltet sich die Reserve 2 in einen Zustand "defekt" (Operation 14), wobei der Master die Prozesssteuerung fortsetzt (Operation 15). Die Reserve 2 zeigt mittels geeigneter Anzeigemittel einem Service-Techniker diesen Defektzustand an. Der Defektzustand zeigt dem Service-Techniker somit an, welche CPU (CPU-Baugruppe, CPU-Modul) ersetzt werden muss.

Es kann vorkommen, dass während des Fehlersuchbetriebs der Reserve 2 der Master 1 im Hinblick auf die Prozesssteuerung ausfällt (Verzweigung 16). In diesem Fall übernimmt die Reserve 2 in einem Schritt 17 die internen Master-Daten (Werte eine Timers, Werte eines Zählers, Inhalte von Datenbausteinen, ...) und übernimmt anschließend die Prozesssteuerung, wobei der Wechsel nicht "stoßfrei" erfolgt (Operation 18). Ein Service-Techniker kann den gestörten Master 1 durch eine neue CPU (CPU-Baugruppe, CPU-Modul) ersetzen.

Für den Fall dagegen, dass während des Fehlersuchbetriebs der Reserve 2 der Master 1 nicht gestört ist (Verzweigung 16) wird nach dem Fehlersuchbetrieb in einer Operation 19 die Reserve 2 durch den Master 1 "aufgedated", wodurch die Reserve 2 alle relevanten Prozesssteuerdaten des Masters 1 übernimmt. Dadurch wird ermöglicht, zu einem späteren Zeitpunkt, zu dem sowohl der Master 1 als auch die Reserve 2 jeweils den Fehlersuchbetrieb beendet haben, das Automatisierungssystem AS von dem Solobetrieb in den Redundanzbetrieb zu überführen. Nach dem Aufdaten der Reserve 2 übernimmt die Reserve 2 als "neuer" Master die Masterschaft bzw. die Prozesssteuerung (Operation 20) und der Master 1 fungiert als "neue" Reserve, die in einer Operation 21 einen weiteren Fehlersuchbetrieb startet, um somit zu erkennen, ob die "neue" Reserve - also der "alte" Master 1 - fehlerbehaftet ist. Für den Fall, dass die "neue" Reserve ("alter" Master 1) keinen Fehler detektiert hat, wird die "neue" Reserve ("alter" Master 1) mit den relevanten Prozesssteuerdaten des "neuen" Masters ("alte" Reserve 2) "aufgedated" und das Automatisierungssystem AS wechselt wieder von einem Solobetrieb in den redundanten Betrieb (Operation 25). Für den Fall dagegen, dass die "neue" Reserve einen Fehler detektiert hat, wechselt die "neue" Reserve in einen Defektzustand (Operation 23) und der "neue" Master ("alte" Reserve 2) übernimmt in einem Solobetrieb die Prozesssteuerung.

## Patentansprüche

1. Verfahren zum Betreiben eines redundanten mit zwei Teilsystemen (1, 2) versehenen Automatisierungssystems (AS), wobei in einem redundanten Betrieb eines der Teilsysteme (1) als Master fungiert und die Prozesssteuerung übernimmt und das andere Teilsystem (2) als Reserve fungiert, wobei der Master (1) und die Reserve (2) sich über Kommunikationsmittel synchronisieren und im Falle eines Synchronisationsverlustes,
a. Prozesseingänge eines Prozessabbildes des Masters (1) mit Prozesseingängen eines Prozessabbildes der Reserve (2) abgeglichen werden,
b. die Kommunikation der Reserve (2) mit weiteren Komponenten des Automatisierungssystems (AS) eingestellt wird,
c. für den Fall, dass der Master (1) während einer vorgegebenen Zeitspanne (Ts) ausfällt, die Reserve (2) als neuer Master die Prozesssteuerung übernimmt,
**dadurch gekennzeichnet, dass**
d. für den Fall, dass der Master (1) während der vorgegebenen Zeitspanne (Ts) nicht ausfällt, die Reserve (2) nach dieser Zeitspanne (Ts) zur Ermittlung der Ursache des Synchronisationsverlustes einen Fehlersuchbetrieb startet, wobei für den Fall, dass die Reserve nicht fehlerbehaftet ist, der Master (1) nach dem Fehlersuchbetrieb die Reserve (2) im Rahmen eines Aufdatens mit relevanten Prozesssteuer-Daten versorgt, wobei nach dem Aufdaten die Reserve (2) als neuer Master die Prozesssteuerung übernimmt und der Master (1) als neue Reserve einen weiteren Fehlersuchbetrieb startet.

2. Verfahren nach Anspruch 1, **dadurch gekennzeichnet, dass** für den Fall, dass während des Fehlersuchbetriebs die Reserve (2) einen Fehler detektiert, die Reserve (2) einen Defekt-Zustand einnimmt.

3. Verfahren nach Anspruch 1, **dadurch gekennzeichnet, dass** für den Fall, dass während des Fehlersuchbetriebs der Master (1) gestört ist, der Master (1) interne Master-Daten der Reserve (2) übermittelt und einen Defekt-Zustand anzeigt, wobei die Reserve (2) als neuer Master die Prozesssteuerung übernimmt.

4. Verfahren nach einem der Ansprüche 1 bis 3, **dadurch gekennzeichnet, dass** die vorgegebene Zeitspanne (Ts) mittels eines Engineering-Systems projektierbar ist.

5. Redundantes mit zwei Teilsystemen (1, 2) versehenes Automatisierungssystem (AS), wobei in einem redundanten Betrieb eines der Teilsysteme (1) als Master fungiert und die Prozesssteuerung übernimmt und das andere Teilsystem (2) als Reserve fungiert, **dadurch gekennzeichnet, dass** der Master (1) und die Reserve (2) zur Ausführung des Verfahrens nach einem der Ansprüche 1 bis 4 bestimmt und eingerichtet sind.

6. Redundantes Automatisierungssystem (AS) nach Anspruch 5, **dadurch gekennzeichnet, dass** die vorgegebene Zeitspanne (Ts) mittels eines Engineering-Systems des Automatisierungssystems (AS) projektierbar ist.

## Claims

1. Method for operating a redundant automation system (AS) having two subsystems (1, 2), wherein in redundant operation one of the subsystems (1) operates as a master and assumes process control and the other subsystem (2) operates as a reserve, wherein the master (1) and the reserve (2) are synchronised by way of means of communication and in the event of a loss of synchronisation,
a. Process inputs of a process image of the master (1) are compared with process inputs of a process image of the reserve (2),
b. The communication of the reserve (2) with additional components of the automation system (AS) is adjusted,
c. If the master (1) fails during a predefined period of time (Ts), the reserve (2) assumes process control as the new master,
**characterised in that**
d. In the event that the master (1) does not fail during the predefined period of time (Ts), after this period of time (Ts) the reserve (2) initiates troubleshooting to determine the cause of the loss of synchronisation, wherein if the reserve is not faulty, after troubleshooting the master (1) provides the reserve (2) with relevant process control data in the context of an update, wherein after updating the reserve (2) assumes process control as the new master and the master (1) initiates further troubleshooting as the new reserve.

2. Method according to claim 1, **characterised in that** if the reserve (2) detects an error during troubleshooting, the reserve (2) adopts a defective status.

3. Method according to claim 1, **characterised in that** if the master (1) is interrupted during troubleshooting, the master (1) transfers internal master data to the reserve (2) and displays a defective status, wherein the reserve (2) assumes process control as the new master.

4. Method according to one of the claims 1 to 3, **characterised in that** the predefined period of time (Ts) is configurable by means of an engineering system.

5. Redundant automation system (AS) having two subsystems (1, 2), wherein in redundant operation one of the subsystems (1) operates as the master and assumes process control and the other subsystem (2) operates as the reserve, **characterised in that** the master (1) and the reserve (2) are defined and configured to perform the method according to one of the claims 1 to 4.

6. Redundant automation system (AS) according to claim 5, **characterised in that** the predefined period of time (Ts) is configurable by means of an engineering system of the automation system (AS).

## Revendications

1. Procédé pour faire fonctionner un système (AS) d'automatisation redondant, pourvu de deux systèmes (1, 2) partiels, dans lequel, dans un fonctionnement redondant, l'un des systèmes (1) partiels fonctionne en maître et prend en charge la commande de processus, et l'autre système (2) partiel fonctionne en réserve, dans lequel le maître (1) et la réserve (2) se synchronisent par des moyens de communication et, dans le cas d'une perte de synchronisation,
a. On adapte des entrées de processus d'une reproduction de processus du maître (1) à des entrées de processus d'une reproduction de processus de la réserve (2),
b. on règle la communication de la réserve (2) avec d'autres composants du système (AS) d'automatisation,
c. dans le cas où le maître (1) est défaillant pendant un laps de temps (TS) donné à l'avance, la réserve (2) prend en charge en tant que nouveau maître la commande de processus, **caractérisé en ce que**
d. dans le cas où le maître (1) n'est pas défaillant pendant le laps de temps (TS) donné à l'avance, la réserve (2), après ce laps de temps (TS), lance, pour la détermination de la cause de la perte de synchronisation, un fonctionnement en recherche de défaut, dans lequel, dans le cas où la réserve n'est pas entachée d'un défaut, le maître (1), après le fonctionnement en recherche de défaut, alimente la réserve (1) dans le cadre d'une mise à jour en données de commande de processus pertinentes, dans lequel, après la mise à jour, la réserve (2) prend en charge comme nouveau maître la commande de processus et le maître (1) lance, comme nouvelle réserve, un autre fonctionnement en recherche de défaut.

2. Procédé suivant la revendication 1, **caractérisé en ce que**, dans le cas où, pendant un fonctionnement en recherche de défaut, la réserve (2) détecte un défaut, la réserve (2) prend un état défectueux.

3. Procédé suivant la revendication 1, **caractérisé en ce que**, dans le cas où, pendant le fonctionnement en recherche de défaut, le maître (1) est perturbé, le maître (1) transmet à la réserve (2) des données de maître internes et indique un état défectueux, la réserve prenant en charge comme nouveau maître la commande de processus.

4. Procédé suivant l'une des revendications 1 à 3, **caractérisé en ce que** le laps de temps (TS) donné à l'avance peut être planifié au moyen d'un système d'ingénierie.

5. Système (AS) d'automatisation redondant, pourvu de deux systèmes (1, 2) partiels, dans lequel dans un fonctionnement redondant l'un des systèmes (1) partiels fonctionne en maître et prend en charge la commande de processus et l'autre système (2) partiel fonctionne en réserve, **caractérisé en ce que** le maître (1) et la réserve (2) sont définis et conçus pour exécuter le procédé suivant l'une des revendications 1 à 4.

6. Système (AS) d'automatisation redondant suivant la revendication 5, **caractérisé en ce que** le laps de temps (TS) donné à l'avance peut être planifié au moyen d'un système d'ingénierie du système (AS) d'automatisation.
